# EUROPÄISCHE PATENTSCHRIFT

(11) **EP 2 146 889 B1**
(45) Veröffentlichungstag und Bekanntmachung des Hinweises auf die Patenterteilung: **19.01.2011**
(21) Anmeldenummer: 08749739.2
(22) Anmeldetag: 25.04.2008
(51) Int. Cl.: B62D 1/183, B62D 1/184, B62D 1/187

(54) **ANORDNUNG FÜR EINE LENKSÄULE EINES NUTZFAHRZEUGES**
ARRANGEMENT FOR A STEERING COLUMN OF A COMMERCIAL VEHICLE
SYSTÈME POUR UNE COLONNE DE DIRECTION DE VÉHICULE UTILITAIRE

(30) Priorität: 16.05.2007 DE 102007023080
(43) Veröffentlichungstag der Anmeldung: 27.01.2010
(73) Patentinhaber: ZF-Lenksysteme GmbH, 73527 Schwäbisch Gmünd (DE)
(72) Erfinder: DIETERLE, Günter, 73547 Lorch (DE); HEINTSCHEL, Manfred, 73525 Schwäbisch Gmünd (DE)
(86) Internationale Anmeldenummer: PCT/EP2008/055080
(87) Internationale Veröffentlichungsnummer: WO 2008/138731

(56) Entgegenhaltungen:
- WO-A-2006/108631
- WO-A1-2007/058362
- DE-A1- 4 016 163
- US-A- 5 168 768

## Beschreibung

### GEBIET DER ERFINDUNG

Die Erfindung betrifft eine Anordnung für eine Lenksäule eines Nutzfahrzeuges nach dem Oberbegriff des Anspruchs 1.

Unter den bekannten Anordnungen für Lenksäulen von Nutzfahrzeugen gibt es hauptsächlich zwei verschiedene Varianten. Zum einen handelt es sich um einfache Konstruktionen mit einer starr eingestellten Lenksäule. Die Höhe bzw. Neigung der Lenksäule kann hierbei nur während der Montage der Lenksäule eingestellt und später nicht mehr verändert bzw. verstellt werden. Zum anderen handelt es sich um Konstruktionen, bei denen die Lenksäule und somit auch das Lenkrad vom Fahrer selbst für den Fahrbetrieb in der Höhe und/oder in der Neigung verstellt werden kann Insbesondere zum Einstieg in das Fahrzeug bzw. beim Ausstieg kann das Lenkrad in eine angenehme Einstiegsstellung, die sog. Easy-Entry-Position, gebracht werden. Dabei wird im Stillstand des Fahrzeugs (Parkposition) das Lenkrad vom Fahrer weggeschwenkt, so dass er bequemer ein- und aussteigen kann. Jedoch muss beim Zurückstellen der Lenksäule in die eigentliche Fahrposition immer die ursprünglich eingestellte Neigung und evtl. auch die eingestellte Höhe des Lenkrades gesucht werden. Wünschenswert wäre es, hier eine automatische Erinnerungsfunktion, eine sog. Memory-Funktion, zu haben, d.h. eine Funktion, die es erlaubt, dass der Fahrer das Lenkrad wieder schnell in die für ihn eingestellte Fahrposition zurückführen kann.

Im Bereich von Personenkraftfahrzeugen (PKW) sind Anordnungen mit elektromotorisch betriebenen Einstellhilfen bekannt, die u.a. auch dafür sorgen, dass die Lenkradstellung automatisch verstellt und in vorprogrammierte Positionen bewegt werden kann. Bei diesen bekannten Anordnungen ist also die Memory-Funktion recht aufwendig und kostenintensiv realisiert. Weil hierzu in der Regel elektrische Stellmotoren mit Getriebe eingesetzt werden, ist die Bewegungs- bzw. Verstellgeschwindigkeit recht langsam. Daher sind diese im PKW-Bereich eingesetzten Lösungen für den praktischen Einsatz im Nutzfahrzeugbereich (NKW-Bereich) schlecht geeignet. Denn dort können solche keine längeren Bewegungs- und Verstellzeiten akzeptiert werden.

Der Bedarf für intelligente Lösungen ist besonders groß für NKW im Verteilerverkehr, bei denen der Fahrer oftmals ein- und aussteigen muss. Hier besteht der große Wunsch nach einer Anordnung, welche die Easy-Entry-Funktion in Verbindung mit einer Memory-Funktion schnell und einfach realisiert. Dabei soll zum einen die Easy-Entry-Funktion es ermöglichen, dass der Fahrer das Lenkrad ganz nach vorne wegschwenken kann, um das Lenkrad in eine horizontale Stellung bzw. Parkposition zu bringen, um somit einen größtmöglichen Freigang durch die Kabine zu bekommen. Zum anderen soll eine einfach konstruierte und sofort wirkende Memory-Funktion zur Verfügung gestellt werden, um dann nach dem Einsteigen das Lenkrad wieder schnell und exakt in seine ursprüngliche Stellung (Fahrposition) zurückschwenken zu können.

Dabei soll der Umstand berücksichtigt werden, dass insbesondere im NKW-Bereich die Verstellbereiche der Lenksäule deutlich größer als im PKW-Bereich sind.

Die WO 2006/108631 A1 offenbart eine gattengsgemabe Lenksäule, die im Falle eines Frontalaufpralles zum Schutz des Fahrers eine andere Lage einnehmen kann. Dabei ist eine Lenkspindel drehbar in der Koppel einer Getriebekette gelagert, deren beide Lenker in ihren unteren Bereichen über Lenkergelenke an fest stehende Fahrzeugteile angelenkt sind. Die Geometrie der Getriebekette ist derart gestaltet, dass bei Verwärtsfahrt im Falle eines Frontalaufpralles die Lenkradebene ihre Neigung verstärkt der Vertikalen annähert. Um nun eine Anordnung zu schaffen, die bei einem Frontalaufprall wirksam eine Schutzfunktion für den Fahrer erfüllt und es zugleich ermöglicht, Höhe und Neigung des Lenkrades individuell einzustellen, ist das Lenkrad für den Gebrauchszustand mittels Einstellmitteln in Höhe und Neigung dadurch einstellbar, dass die Koppel entsprechend einstellbar ist, und zwar durch Einstellen der Länge von wenigstens einem der Lenker und/oder durch Verlagerung von wenigstens einem Lenkergelenk.

Die DE 40 16 163 A1 zeigt eine Vorrichtung, die es ermöglicht, die Lenksäule aus einer individuell eingestellten Fahrposition in eine das Aus- und Einsteigen begünstigende Winkellage zu schwenken. Dabei ist am Lagergehäuse eine Schwinge festgelegt, die einen mit einer Raste ausgerüsteten, schwenkbar gelagerten Hebel aufweist, der in der Betriebsstellung der Lenksäule eine Rastfläche eines ortfesten Lagerbockes hintergreift.

Auch die US 5,168,768 beschreibt einen Schwenkmechanismus für eine Lenksäule. Um die Lenksäule in der gewünschten Lage zu arretieren, ist eine Rasteinrichtung vorgesehen, die ein an das untere Lenksäulenteil gekoppeltes Segmentteil mit einer Verzahnung sowie eine mit dieser Verzahnung manuell in Eingriff bringbare an das obere Lenksäulenteil gekoppelte Sperrklinke umfaßt.

Schließlich wird in der WO 2007/058362 A1 ein Lenksäulensystem offenbart, in dem eine Lenksäule mittels einer Zahneingreiffunktion durch einen Lenkpositions-einstellungs-Betätigungshebel relativ zu einem Körper fixiert wird.

### ZUSAMMENFASSUNG DER ERFINDUNG

Es hat sich also gezeigt, dass im NKW-Bereich herkömmliche Anordnungen mit elektromotorischer Betätigung nicht ausreichen. Insbesondere würde sich die Lenksäule nur sehr langsam in seine Ausgangsposition zurück bewegen und dazu viel Zeit benötigen. Diese Zeit kann sich der Fahrer eines NKW nicht nehmen, gerade auch im Hinblick auf das häufige Ein- und Aussteigen im innerstädtischen Bereich beim sog. "Parken in zweiter Reihe". Gerade hier besteht das Erfordernis für eine Lösung, die es ermöglicht, das Lenkrad nach dem Einstieg in das Fahrzeug sehr schnell wieder in seine vordefinierte Ausgangs-Stellung zurück bewegen zu können. Es besteht somit der Wunsch nach einer kostengünstigen und effektiven Lösung, die beide Funktionen, also Memory-Funktion und Easy-Entry-Funktion, in einer besonders für den NKW-Bereich vorteilhaften Weise miteinander kombiniert.

Es ist daher Aufgabe der vorliegenden Erfindung, eine verbesserte Lösung vorzuschlagen, die in vorteilhafter Weise die oben genannten Nachteile überwindet. Insbesondere soll eine Anordnung für eine Lenksäule vorgeschlagen werden, die eine kostengünstige und schnell zu bedienende Easy-Entry-Funktion in Kombination mit einer sicheren Memory-Funktion für die Lenksäulen-Verstellung bereitstellt.

Zur Lösung der vorgenannten Aufgabe wird eine Anordnung für eine Lenksäule eines Nutzfahrzeuges mit einem Lagerbock vorgeschlagen, in dem ein oberes Lenksäulengehäuse für eine Lenkspindel verstellbar gelagert ist, wobei der Lagerbock erste Führungs- und Befestigungsmittel aufweist, um das Lenksäulengehäuse in seiner Höhe verstellbar zu befestigen, und zweite Führungs- und Befestigungsmittel aufweist, um das Lenksäulengehäuse in seiner Neigung verstellbar zu befestigen, wobei die zweiten Führungs- und Befestigungsmittel einen Hebelarm umfassen, der an einem unteren Ende verstellbar an dem Lagerbock befestigt ist und an einem oberen Ende eine verzahnte Ausnehmung aufweist, in die ein mit dem Lenksäulengehäuse verbundenes verzahntes Element eingreift. Das verzahnte Element wiederum ist direkt oder über einen Verbindungsarm bzw. Hebel mit dem Lenksäulengehäuse verbunden.

Durch diese Konstruktion wird ermöglicht, dass eine schnellstmögliche Rückstellung in die ursprüngliche Fahrposition, ohne Beeinflussung der fahrerseitigen Basis-Einstellung der Lenksäule in Höhe und Neigung, erfolgen kann. Insbesondere werden für die Realisierung der Memory-Funktion keine elektromotorischen Einstellhilfen, Bauteile bzw. Komponenten benötigt. Die Anordnung kann vorzugsweise nach Art eines BaukastenSystems ausgeführt sein, welches eine flexible einsetzbare Konstruktion für verschiedene Anwendungen darstellt, wie z.B. für eine starre Lenksäule, für eine nur im Lenkradwinkel einstellbare Lenksäule oder für eine höhenverstellbare und schwenkbare Lenksäule.

Besonders vorteilhafte Ausgestaltungen der Erfindung sind den Unteransprüchen zu entnehmen:
Demnach ist es besonders vorteilhaft, wenn die ersten Führungs- und Befestigungsmittel ein Langloch aufweisen, das für eine Verstellung der Höhe ausgerichtet ist und in das ein mit dem oberen Lenkgehäuse verbindbares erstes Klemm- oder Schraubelement fixierbar aufgenommen ist. Hiermit wird eine besonders kostengünstige Verstellung in der Höhe realisiert.

Auch ist es von besonderem Vorteil, wenn der Hebelarm an seinem unteren Ende ein Rundloch oder ein gekrümmtes Langloch aufweist, das für eine Verstellung der Neigung vorgesehen ist und in das ein mit dem oberen Lenksäulengehäuse verbindbares zweites Klemm- oder Schraubelement fixierbar aufgenommen ist. In diesem Zusammenhang ist es weiterhin von Vorteil, wenn durch eine Fixierung des Hebelarms mittels des zweiten Schraub- oder Klemmelements und durch ein unteres Ende der Ausnehmung ein unterer Anschlag für das verzahnte Element definiert ist, der zumindest in Neigungsrichtung eine für den Fahrbetrieb optimal auf den Fahrer eingestellte Lenkradposition bestimmt. Hiermit wird aufgrund der Verzahnung eine effektive Sicherung der Easy-Entry-Funktion realisiert, weil das Lenkrad nicht unbeabsichtigt zurückschwenken kann. Gleichzeitig wird durch den definierten mechanischen Anschlag eine schnelle und wirksame Memory-Funktion realisiert. Zur weiteren Verbesserung kann der mechanische Anschlag noch mit einem Dämpfungselement, wie z.B. ein Kunststoffelement, versehen werden.

Vorteilhaft ist es auch, wenn durch einen am Führungsblech angebrachten oberen Anschlag der maximale Schwenkbereich nach vorne definiert ist, der zumindest in Neigungsrichtung eine für den Ein- und Ausstieg des Fahrers maximal einstellbare Lenkradposition bestimmt. Dies erhöht u.a. die Sicherheit der Easy-Entry-Funktion, weil das Lenkrad in einen exakt definierte Einstiegsposition, z.B. waagerechte Position, gebracht werden kann.

Es ist auch von Vorteil, wenn das mit dem Lenksäulengehäuse verbundene verzahnte Element, das in die Ausnehmung am oberen Ende des Hebelarms eingreift, ein Fixierelement, insbesondere einen Exzenterverschluss bzw. Exzenterhebel, aufweist. Dies macht die Bedienung der Easy-Entry-Funktion besonders einfach und dennoch schnell und zuverlässig.

Vorteilhafterweise ist der Lagerbock aus zwei Hauptgehäuseteilen, insbesondere aus zwei Flanschhälften, montiert. Der Lagerbock wird also mehrstückig ausgeführt, und es wird somit ein sehr flexibles Baukasten-System geschaffen.

Auch ist es vorteilhaft, wenn die ersten Führungs- und Befestigungsmittel mindestens eine Führungsschiene aufweisen, in der ein Führungsblech des Lenksäulengehäuses in der Höhe verschiebbar aufgenommen ist. Diese Führung ist besonders exakt und zuverlässig.

Weiterhin ergeben sich Vorteile, wenn die ersten und zweiten Führungs- und Befestigungsmittel Klemmschrauben und/oder mindestens eine Klemmeinrichtung, insbesondere einen pneumatischen und/oder hydraulischen Druckkolben oder ein elektromechanische Klemmeinrichtung, aufweisen. Hiermit wird auf eine relativ kostengünstige Weise eine leicht bedienbare Fixierung erreicht, die etwa über einen mechanischen und/oder elektrischen Schalter oder Taster sehr schnell und einfach arretiert und wieder gelöst werden kann.

### DETAILLIERTE BESCHREIBUNG DER ERFINDUNG

Die vorstehend genannten, ebenso wie weitere Aufgaben, Merkmale und Vorteile dieser Erfindung werden noch näher aus der folgenden detaillierten Beschreibung ersichtlich, die auf die beiliegenden Zeichnungen Bezug nimmt, wobei:
- Fig. 1: eine als Baukasten-System ausgeführt Anordnung mit einer starr montierten Lenksäule zeigt;
- Fig. 2: eine Variante zur Anordnung nach Fig. 1 zeigt, bei der die Neigung der Lenksäule verstellbar ist;
- Fig. 3: im Detail die Ausgestaltung eines Hebelarmes mit Aussparung zeigt, in die ein für eine schnelle und sichere Verstellung der Neigung vorgesehenes verzahntes Element eingreift;
- Fig. 4: eine weitere Variante zur Anordnung nach Fig. 1 zeigt, bei der die Höhe und Neigung der Lenksäule verstellbar ist;
- Fig. 5: eine Queransicht darstellt, die das Verschwenken des Lenkrades mittels der Anordnung nach Fig. 4 veranschaulicht;
- Fig. 6: eine weitere Variante zur Anordnung nach Fig. 1 zeigt, bei der die Höhe und Neigung der Lenksäule verstellbar ist, wobei eine besonders schnelle Verstellung in eine Easy-Entry-Position möglich ist;
- Fig. 7 u. 8: Queransichten darstellen, die das Verschwenken des Lenkrades mittels der Anordnung nach Fig. 6 veranschaulicht;

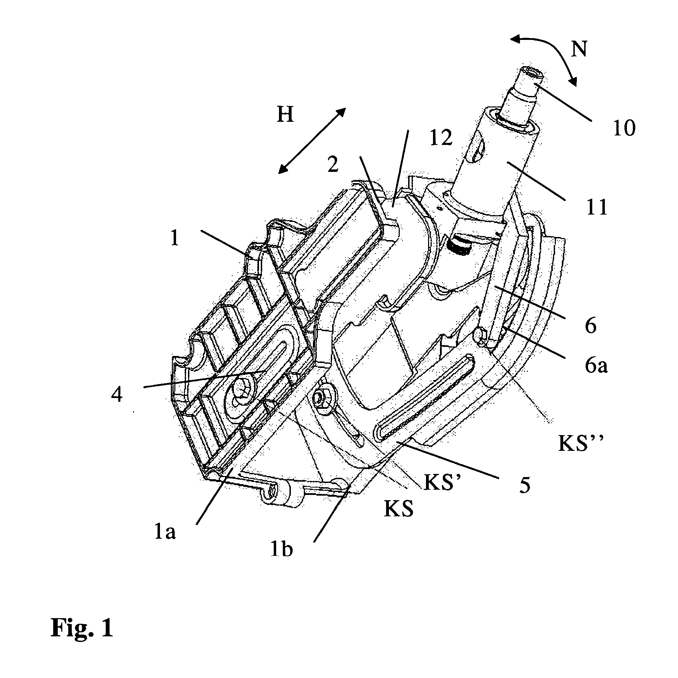

Die Fig. 1 zeigt eine erfindungsgemäße Anordnung mit einer starr montierten Lenksäule. Die Anordnung umfasst einen Lagerbock 1, der modular nach Art eines BaukastenSystems im wesentlichen aus zwei flanschartig geformten Gehäusehälften 1a und 1b zusammengesetzt ist. Diese werden nachfolgend auch mit Flanschhälften 1a und 1b bezeichnet. In dem Lagerbock 1 ist ein oberes Lenksäulengehäuse 11 für eine Lenkspindel 10 verstellbar gelagert. Zur Höhen-Verstellung der Lenksäule weist der Lagerbock 1 erste Führungs- und Befestigungsmittel auf, zu denen Führungsschienen 2 gehören, in denen jeweils ein Führungsblech 12 des Lenksäulengehäuses 11 längsseits geführt und gehalten wird.

Weiterhin ist in jeder Flanschhälfte 1a oder 1b ein Langloch 4 vorgesehen, das ebenfalls zu den ersten Führungs- und Befestigungsmitteln gehört und in Richtung der einzustellenden Höhe H ausgerichtet ist. In dem Langloch 4 wird ein erstes Klemm- oder Schraubelement in Gestalt einer Klemmschraube KS geführt und kann z.B. werkstattseitig in der gewünschten Höheneinstellung fixiert bzw. befestigt werden.

Die in der Fig. 1 dargestellte Anordnung hat außerdem zweite Führungs- und Befestigungsmittel, insbesondere einen Hebelarm 5 mit einer Aussparung 5a, in die ein verzahntes Element 6a eingreift. Der Hebelarm 5 ist an einem unteren Ende verstellbar an dem Lagerbock 1 befestigt. Dazu weist der Hebelarm 5 an seinem unteren Ende ein Rundloch oder vorzugsweise ein gekrümmtes Langloch 5b auf, das bei der Verstellung der Neigung N als Drehpunkt bzw. Führung dient. Hierzu wird ein zweites Klemm- oder Schraubelement, wie z.B. eine weitere Klemmschraube KS', fixierbar in dem Rund- bzw. Langloch aufgenommen und kann dann im gewünschten Neigungswinkel festgezogen werden.

Durch die Fixierung des Hebelarms 5 mittels dieses zweiten Klemm- oder Schraubelements KS' und durch ein unteres Ende der Ausnehmung 5a wird ein unterer Anschlag 7 für das verzahnte Element 6a definiert, der zumindest in Neigungsrichtung N eine für den Fahrbetrieb optimal auf den Fahrer eingestellte Lenkradposition bestimmt.

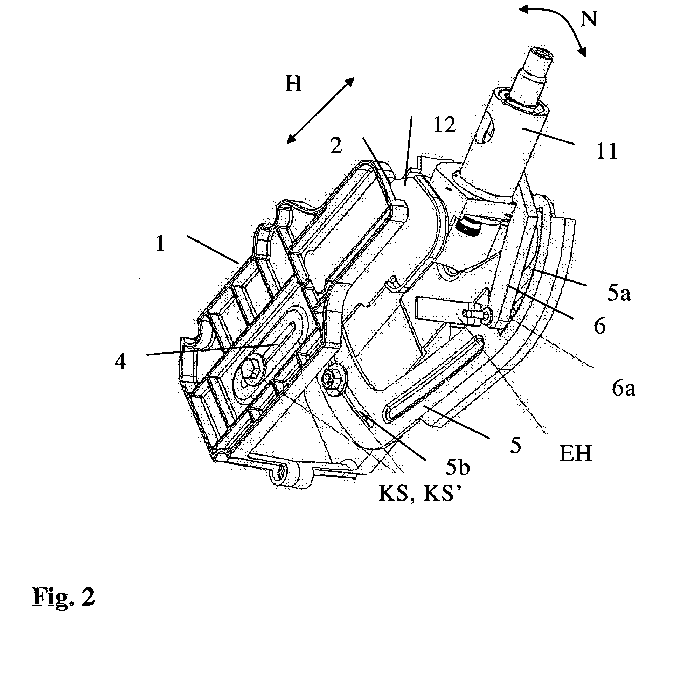

Eine Konstruktionsvariante der Anordnung zeigt die Fig. 2, bei der das verzahnte Element 6a noch einfacher und schneller innerhalb der verzahnten Ausnehmung 5a gelöst und wieder fixiert werden kann. Hierzu ist an dem verzahnten Element 6a bzw. an der dort vorgesehenen Klemmschraube KS" ein Exzenterhebel EH angebracht, mit dem die Verzahnung und Verklemmung sehr schnell manuell, z.B. vom Fahrer selbst, gelöst und wieder fixiert werden kann.

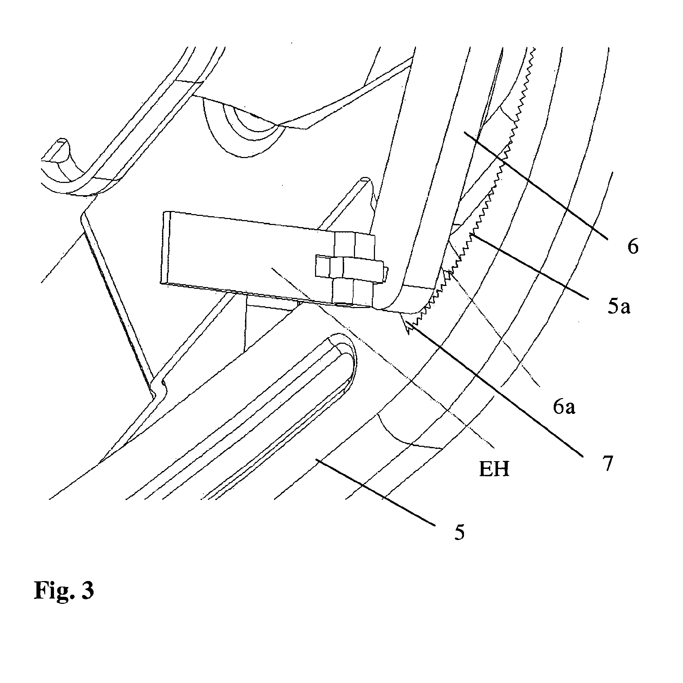

Die Verzahnung wird näher in der Detaildarstellung nach Fig. 3 gezeigt. Wie dort zu sehen ist, befindet sich die Verzahnung zumindest auf einer Innenkante der am Hebelarm 5 vorgesehenen Ausnehmung 5a. Die Verzahnung kann in Gestalt einer verzahnten oder geriffelten Fläche, einer Zahnreihe oder ähnlicher Merkmale realisiert werden, welche zumindest eine Reibung oder vorzugsweise sogar ein Ineinanderhaken mit dem verzahnten Element 6a bewirken können. Das verzahnte Element 6a ist passend dazu in Form eines in der Ausnehmung 5a geführten bzw. sich bewegenden Stücks ausgebildet, das ebenfalls verzahnt bzw. geriffelt ist. Durch Lösen des Exzenterhebels EH kann das verzahnte Element 6a und somit auch der damit verbundene Arm bzw. Hebel 6 bewegt werden, welcher die Neigungsposition des Lenksäulengehäuses bzw. der Lenksäule bestimmt (s. auch Fig. 2). Dabei stellt die Verzahnung sicher, dass nach dem Hochschwenken der Lenksäule diese nicht unbeabsichtigt nach unten zurückschwenken kann, sondern in die Verzahnung einrastet. Mit Hilfe des Exzenterhebels EH kann die Neigung N der Lenksäule leicht und schnell manuell verstellt werden und insbesondere in eine Easy-Entry-Positon gebracht werden. Durch das Festziehen des Exzenterhebels 7 wird eine schnelle Fixierung erreicht, die besonders sicher ist, weil die Klemmung der Feststellschraube KS" zusammen mit der Verzahnung bzw. Reibung wirkt und somit zu einer kraft- und formschlüssigen Verbindung bzw. Arretierung führt. Diese kann mit Hilfe des Exzenterhebels 7 dann wieder sehr schnell gelöst werden, um das Lenkrad zurück in die optimale Fahrposition zu bringen.

Dabei bewirkt der in der Aussparung 5a definierte untere Anschlag 7, dass das Lenkrad wieder exakt in die gewünschte Fahrposition zurückgeführt wird, welche wiederum durch die Grundeinstellung des Hebelarmes 5 bestimmt wird. Insgesamt ergibt sich durch diese Konstruktion eine mechanische Memory-Funktion in Kombination mit einer bedienfreundlichen Easy-Entry-Funktion. Damit kann die Lenkradneigung N sehr schnell und effektiv bis zur Easy-Entry-Stellung bzw. Parkposition eingestellt und wieder in die exakte Fahrposition gebracht werden. Anstelle eines verzahnten Element 6a mit einem Exzenterhebel EH können auch andere Befestigungs- bzw. Einstellmittel eingesetzt werden. Denkbar sind hier z.B. Befestigungsmittel, die mit Seilzug, pneumatisch mit Druckluft, elektrisch mit Motor bewegt werden oder auch hydraulisch sowie durch eine andere Energieform bewegt und gelöst werden können.

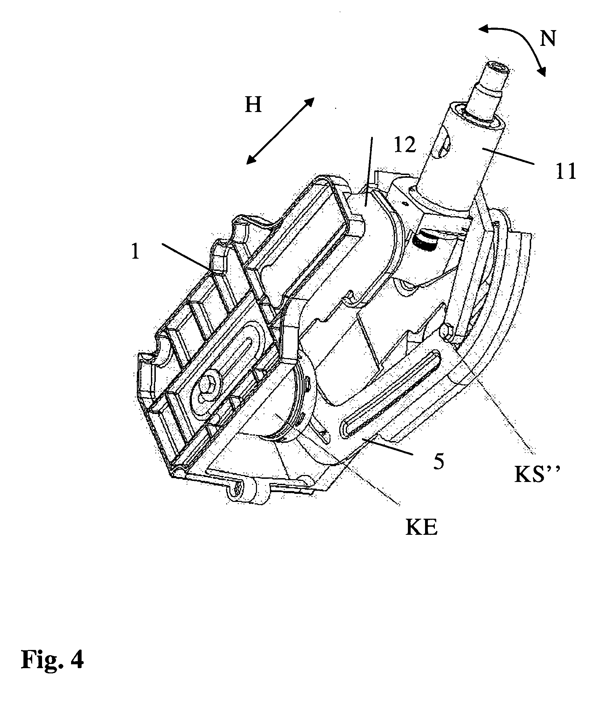

Die Fig. 4 zeigt eine weitere Ausführungsform in Gestalt einer stufenlos in Höhe H und Neigung N einstellbaren Lenksäulen-Anordnung. Die Einstellung geschieht hier zum einen mittels einer Klemmeinrichtung KE, die das Führungsblech 12 und den Hebelarm 5 gegen den Lagerbock 1 klemmt bzw. zum Einstellen der Lenksäule frei gibt. Diese Klemmeinrichtung KE ist hier vorzugsweise ein Druckluftzylinder, kann aber auch jede andere Form von Klemmeinrichtung sein, wie z.B. einen Exzenterhebel oder eine per Seilzug, eine pneumatisch mit Druckluft, eine elektrisch mit Motor, eine hydraulisch oder durch eine andere Energieform betriebene Einrichtung bzw. jedes andere lösbare Klemm- bzw. Spannmittel sein. Zum anderen ist das verzahnte Element 6a mit einer Schraube KS" geklemmt und fixiert.

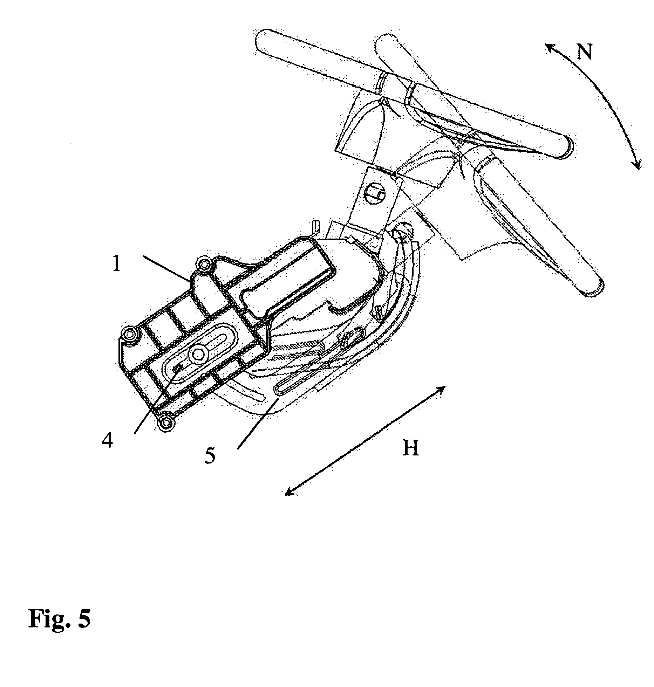

In der Fig. 5 sind in einer Queransicht die verschiedenen Lenkradstellungen dargestellt, welche durch die erfindungsgemäße Lösung sehr schnell und einfach eingestellt werden können. Die Fig. 5 nimmt insbesondere Bezug auf die Ausführungen, bei denen das verzahnte Element 6a mittels Exzenterhebel EH eingespannt bzw. gelöst wird. Anhand der Fig. 5 ist deutlich zu erkennen, dass die Höheneinstellung H im Wesentlichen durch die im Langloch 4 des Lagerbocks 1 geführte Schraube KS fixiert und bestimmt wird. Die Neigung N wiederum wird im Wesentlichen durch die Fixierung des Hebelarm 5 am Lagerbock 1 selbst (Klemmschraube KS') und durch die aktuelle Position der verstellbaren Verzahnung (verzahntes Element 6a) bestimmt, welche vorzugsweise durch den Exzenterhebel EH gelöst werden kann.

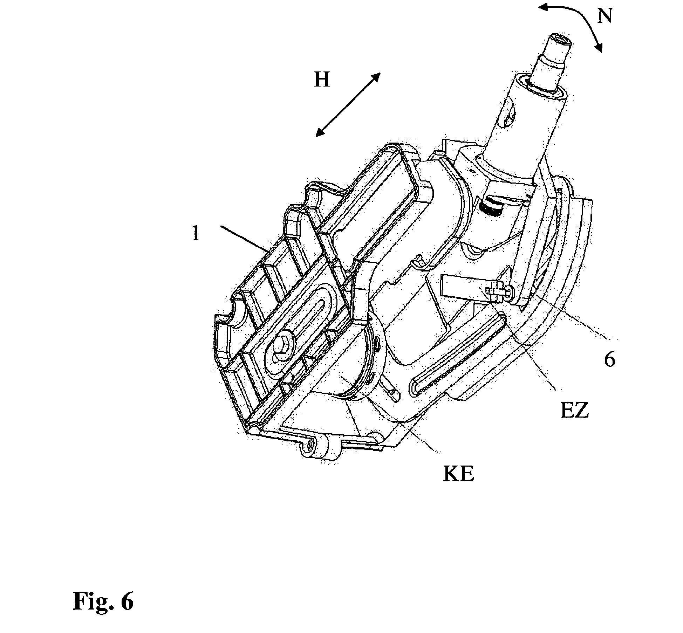

Die Fig. 6 zeigt als weiteres Ausführungsbeispielt eine stufenlos in Höhe und Neigung einstellbare Lenksäule, die eine besonders bedienfreundliche Konstruktion aufweist und ebenfalls mit Easy-Entry-Funktion und Memory-Funktion ausgestattet ist. Auch hier ist eine Klemmeinrichtung KE vorgesehen, die das Führungsblech 12 und den Hebelarm 5 gegen den Lagerbock 1 klemmt bzw. zum Einstellen der Lenksäule freigibt. Für die Fixierung des verzahnten Elements 6a ist wiederum ein Exzenterhebel EH vorgesehen, um bei Bedarf die obere Lenksäule sofort freizugeben, damit diese nach vorne in eine vertikale Stellung, nämlich in die Easy-Entry-Position bzw. Parkposition, geschwenkt werden kann.

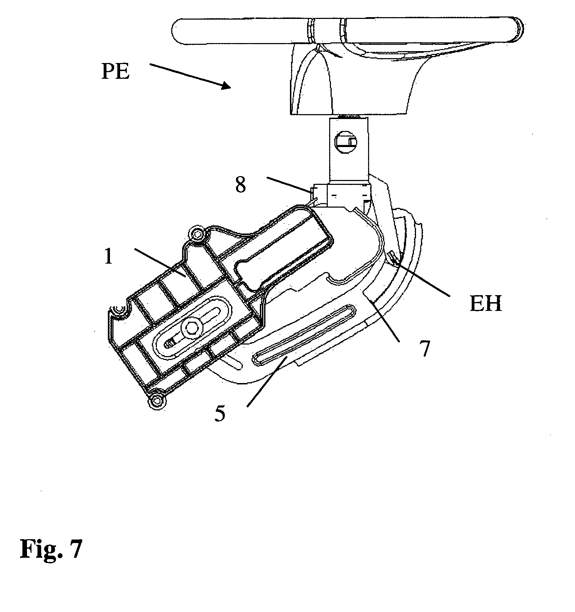

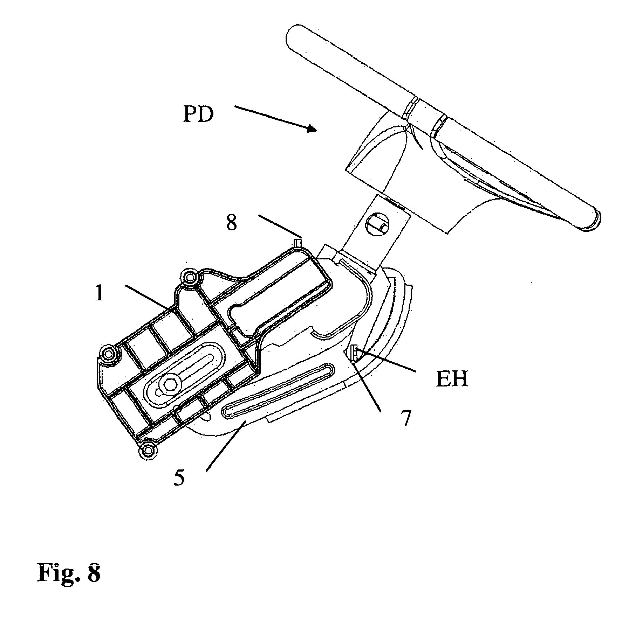

Diese Parkposition PE wird in der Fig. 7 noch deutlicher dargestellt, wobei dort auch zu sehen ist, dass zum Hochschwenken des Lenkrades ein oberer Anschlag 8 vorgesehen werden kann, der die maximale Parkposition definiert. Insbesondere kann durch einen an Führungsblech angebrachten oberen Anschlag 8 eine solche Schwenkbegrenzung definiert sein, der dann zumindest in Neigungsrichtung eine für den Ein- und Ausstieg des Fahrers maximal einstellbare Lenkradposition PE bestimmt. Damit wird z.B. verhindert, dass das Lenkrad zu weit nach vorne in Richtung Windschutzscheibe geschwenkt werden kann, wenn es in die Easy-Entry-Position gebracht wird.

Wie anhand der Fig. 7 zu erkennen ist, kann der Fahrer nach dem Einsteigen das Lenkrad dann wieder bis zu dem unteren Anschlag 7 herunter geschwenkt werden. Dabei definieren der untere Anschlag 7 und die Grundeinstellung bzw. Grundfixierung des Hebelarms 5 am Lagerbock selbst die Fahrposition bzw. die vorher eingestellte Lenkradstellung PD entsprechend der Memory-Funktion.

Durch die vorgestellte Erfindung wird eine besonders einfach aber wirkungsvolle Anordnung für schnelle die Lenksäulen-Verstellung bzw. Lenkrad-Einstellung im NKW vorgeschlagen. Wie oben beschrieben wurde, kann damit die Memory-Funktion auch rein mechanisch und damit auch besonders kostengünstig realisiert werden. Es wird eine schnellstmögliche Rückstellung in die ursprüngliche Fahrposition, ohne Beeinflussung der fahrerseitigen Basis-Einstellung der Lenksäule in Höhe und Neigung, erreicht. Vorteilhafterweise wird die Anordnung im Baukasten-Prinzip realisiert und angeboten, was bedeutet, dass die Lenksäulen-Anordnung in unterschiedlichsten Varianten ausgebildet bzw. für verschiedenste Anwendungen eingesetzt werden kann, wie z.B. in der kostenoptimierten Version als starre (einstellbare aber nicht verstellbare) Lenksäule oder in einer komfortableren Version, bei der der Lenkradwinkel zumindest in der Höhe einstellbar ist. Vorzugsweise ist die Lenkradposition in der Höhe und in der Neigung verstellbar ausgeführt, wobei Memory-Funktion und Easy-Entry-Funktion in der oben beschriebenen Weise miteinander kombiniert wirken.

Hingegen gibt es im Stand der Technik lediglich herkömmliche Anordnungen, bei denen üblicherweise nur ein einstückiger Lagerbock vorgesehen ist, der nur eine Einstellung der Lenkradneigung ermöglicht. Dazu sind üblicherweise im wesentlichen zwei Drehpunkte vorgesehen, nämlich ein erster Drehpunkt, um den das obere Lenkgehäuse selbst im Lagerbock drehbar gelagert ist, und ein zweiter Drehpunkt, der am unteren Ende des Lagerbocks vorgesehen ist und an dem ein Hebel ansetzt, der in ein Verzahnungselement eingreift, welches wiederum am oberen Lenkgehäuse angeordnet ist. Somit kann durch Schwenken des Hebels um den zweiten Drehpunkt ein Lösen oder Fixieren seines Eingriffs in die Verzahnung bewirkt werden, wodurch das obere Lenkgehäuse selbst zum bzw. gegen Schwenken um den ersten Drehpunkt gelöst bzw. arretiert wird. Folglich muss bei solchen Konstruktionen zum Einstellen der Lenkradneigung aber das Verzahnungselement immer gelöst werden muss, wobei dort keine Memory-Funktion vorgesehen ist.

Im Vergleich dazu wird bei der erfindungsgemäßen Lösung (siehe etwa Fig. 6) die Einstellung bzw. Verstellung des Lenkrades in Neigung und Höhe ermöglicht, wobei nur das Klemmelement KE gelöst zu werden braucht. Zum Ein- und Aussteigen braucht wiederum nur das verzahnte Element 6a gelöst zu werden. Nach dem Einsteigen wird das Lenkrad bis auf den unteren Anschlag hin nach unten bewegt und dann wird das verzahnte Elements 6a wieder geschlossen. Das Lenkrad steht dank der Memory-Funktion dann immer exakt in der vorher eingestellten Fahrposition.

Zusammenfassend kann gesagt werden, dass mit Hilfe der Anordnung die Einstellungen sehr einfach zu bedienen sind: Zum Einstellen des Hubs in Höhe und Neigung braucht das Lenkrad nur eingeschoben bzw. ausgezogen und geschwenkt zu werden, wobei das Klemmelement einfach gelöst zu werden braucht. Zum Einstieg bzw. Easy-Entry wird das verzahnte Element gelöst und das Lenkrad ganz nach vorne geschwenkt. Die Verzahnung dient dem Formschluss, zur Vermeidung hoher Klemmkräfte; die Klemmung als Überlagerung eines Kraftschlusses dient auch dazu, das Spiel in der Verzahnung zu kaschieren, d.h. aus unakzeptablem Spiel wird Elastizität. Beim Zurückziehen des Lenkrads in die Memory-Stellung wird das Lenkrad bis zum Anschlag herunter gezogen und so wieder in seine vorige Stellung gebracht. Es ergeben sich insbesondere zwei Schwenkmöglichkeiten in einem Führungsblech, nämlich das Verstellen/Einstellen der Lenkradposition an sich und das Verstellen, um das Lenkrad nach vorne in die Easy-Entry-Position und wieder exakt zurück in die Memory-Position zu bringen.

Durch das vorgestellte Baukasten-Prinzip der Lenksäule sind u.a. folgende Realisierungen leicht darstellbar:
i) eine Basisversion der Lenksäule, welche starr und nicht einstellbar ist;
ii) eine Lenksäule, die stufenlos verstellbar in Höhe und in Neigung ist;
iii) eine Lenksäule mit einstellbarem Lenkradwinkel bis hin zu Easy-Entry mit Memory.

Dabei sind Easy-Entry- und Memory-Funktion kombiniert, wobei Easy-Entry und Memory unabhängig von der Bedienung der Lenksäuleneinstellung sind. Es ergibt sich ein größtmöglicher Freiraum zwischen Fahrersitz und Lenkrad, ein freier Durchgang durch die Fahrerkabine, sowie eine schnelle Rückstellung des Lenkrads in Fahrposition mittels mechanischer Rastfunktion(en).

### Bezugszeichenliste

- 1: Lagerbock (aus zwei Hauptgehäuseteilen bzw. Flanschhälften bestehend)
- 1a/b: linke/rechte Flanschhälfte

- H: Höhe, verstellbar durch erste Befestigungs- und Führungsmittel:
- 2: Führung für Führungsblech
- 4: Langloch für Klemmschraube
- KS: Klemmschraube (erstes Klemm- oder Schraubelement)
- KE: Klemmeinrichtung

- N: Neigung, verstellbar durch zweite Befestigungs- und Führungsmittel:
- 5: Hebelarm
- 5a: Ausnehmung
- 5b: gekrümmtes Langloch
- 6: Hebel (vorzugsweise fest mit dem oberen Lenksäulengehäuse verbunden)
- 6a: verzahntes Element
- EH: Exzenterhebel
- KS', KS": Klemmschauben (zweites, weiteres Klemm- oder Schraubelement)
- 7: unterer Anschlag
- 8: oberer Anschlag (sitzt am Führungsblech)
- 10: Lenkspindel
- 11: (oberes) Lenkgehäuse
- 12: Führungsblech
- PE: Easy-Entry-Stellung (Parkposition des Lenkrades)
- PD: Memory-Stellung (Fahrposition des Lenkrades)

- A0: herkömmliche Anordnung
- H: Hebel
- VE: Verzahnungselement
- D1: Drehpunkt des oberen Lenkgehäuses
- D2: Drehpunkt des Hebels

## Patentansprüche

1. Anordnung für eine Lenksäule eines Nutzfahrzeuges mit einem Lagerbock (1), in dem ein oberes Lenksäulengehäuse (11) für eine Lenkspindel (10) verstellbar gelagert ist, wobei der Lagerbock (1) erste Führungs- und Befestigungsmittel (2, 12, 4, KS) aufweist, um das Lenksäulengehäuse (11) in seiner Höhe (H) verstellbar zu befestigen, und zweite Führungs- und Befestigungsmittel (5, 6, KS') aufweist, um das Lenksäulengehäuse (11) in seiner Neigung (N) verstellbar zu befestigen, wobei die zweiten Führungs- und Befestigungsmittel einen Hebelarm (5) umfassen, der an einem unteren Ende verstellbar an dem Lagerbock (1) befestigt ist und an einem oberen Ende eine verzahnte Ausnehmung (5a) aufweist, in die ein verzahntes Element (6a) eingreift, das direkt oder über einen Hebel (6) mit dem Lenksäulengehäuse (11) verbunden ist,
**dadurch gekennzeichnet, dass**
der Hebelarm (5) an seinem unteren Ende ein Rundloch oder ein gekrümmtes Langloch (5b) aufweist, das für eine Verstellung der Neigung (N) vorgesehen ist und in das ein mit dem oberen Lenkgehäuse (11) verbindbares zweites Klemmoder Schraubelement (KS') fixierbar aufgenommen ist.

2. Anordnung nach Anspruch 1, **dadurch gekennzeichnet, dass**
die ersten Führungs- und Befestigungsmittel ein Langloch (4) aufweisen, das für eine Verstellung der Höhe (H) ausgerichtet ist und in das ein mit dem oberen Lenkgehäuse (11) verbindbares erstes Klemm- oder Schraubelement (KS) fixierbar aufgenommen ist.

3. Anordnung nach Anspruch 2, **dadurch gekennzeichnet, dass**
durch eine Fixierung des Hebelarms (5) mittels des zweiten Klemm- oder Schraubelements (KS') und durch ein unteres Ende der Ausnehmung (5a) ein unterer Anschlag (7) für das verzahnte Element (6a) definiert ist, der zumindest in Bezug auf die Neigung (N) eine für den Fahrbetrieb optimal auf den Fahrer eingestellte Lenkradposition (PD) bestimmt.

4. Anordnung nach Anspruch 3, **dadurch gekennzeichnet, dass**
der untere Anschlag (7) ein Dämpfungselement, insbesondere ein Kunststoffelement, aufweist.

5. Anordnung nach einem der vorhergehenden Ansprüche, **dadurch gekennzeichnet, dass** das mit dem Lenksäulengehäuse (11) verbundene verzahnte Element (6a), das in die Ausnehmung (5a) am oberen Ende des Hebelarms (5) eingreift, ein Fixierelement, insbesondere einen Exzenterverschluss bzw. Exzenterhebel (EH), aufweist.

6. Anordnung nach einem der vorhergehenden Ansprüche, **dadurch gekennzeichnet, dass** der Lagerbock (1) aus zwei Hauptgehäuseteilen, insbesondere aus zwei Flanschhälften (1, 1b), montiert ist.

7. Anordnung nach einem der vorhergehenden Ansprüche, **dadurch gekennzeichnet, dass** die ersten Führungs- und Befestigungsmittel mindestens eine Führungsschiene (2) aufweisen, in der ein Führungsblech (12) des Lenksäulengehäuses (11) in der Höhe (H) verschiebbar aufgenommen ist.

8. Anordnung nach einem der vorhergehenden Ansprüche, **dadurch gekennzeichnet, dass** die ersten und zweiten Führungs- und Befestigungsmittel die Klemmschrauben (KS, KS') und/oder mindestens eine Klemmeinrichtung (KE), insbesondere einen hydraulischen Druckkolben oder eine elektromechanische Klemmeinrichtung, aufweisen.

## Claims

1. Arrangement for a steering column of a commercial vehicle having a bearing block (1), in which an upper steering-column housing (11) for a steering spindle (10) is mounted adjustably, the bearing block (1) having first guide and fastening means (2, 12, 4, KS), in order to fasten the steering-column housing (11) in a height (H)-adjustable manner, and having second guide and fastening means (5, 6, KS'), in order to fasten the steering-column housing (11) in an inclination (N)-adjustable manner, the second guide and fastening means comprising a lever arm (5) which, at a lower end, is fastened adjustably to the bearing block (1) and, at an upper end, has a toothed recess (5a), into which a toothed element (6a) engages which is connected to the steering-column housing (11) directly or via a lever (6), **characterized in that**, at its lower end, the lever arm (5) has a round hole or a curved slot (5b) which is provided for an adjustment of the inclination (N) and into which a second clamping or screw element (KS') which can be connected to the upper steering housing (11) is received fixably.

2. Arrangement according to Claim 1, **characterized in that** the first guide and fastening means have a slot (4) which is oriented for an adjustment of the height (H) and into which a first clamping or screw element (KS) which can be connected to the upper steering housing (11) is received fixably.

3. Arrangement according to Claim 2, **characterized in that** a lower stop (7) for the toothed element (6a) is defined by fixing the lever arm (5) by means of the second clamping or screw element (KS') and by a lower end of the recess (5a), which lower stop (7) defines a steering-wheel position (PD) for the driving operation which is optimum for the driver, at least in relation to the inclination (N).

4. Arrangement according to Claim 3, **characterized in that** the lower stop (7) has a damping element, in particular a plastic element.

5. Arrangement according to one of the preceding claims, **characterized in that** the toothed element (6a) which is connected to the steering-column housing (11) and engages into the recess (5a) at the upper end of the lever arm (5) has a fixing element, in particular an eccentric closure or eccentric lever (EH).

6. Arrangement according to one of the preceding claims, **characterized in that** the bearing block (1) is assembled from two main housing parts, in particular from two flange halves (1, 1b).

7. Arrangement according to one of the preceding claims, **characterized in that** the first guide and fastening means have at least one guide rail (2), in which a guide plate (12) of the steering-column housing (11) is received in a height (H)-adjustable manner.

8. Arrangement according to one of the preceding claims, **characterized in that** the first and second guide and fastening means have the clamping screws (KS, KS') and/or at least one clamping device (KE), in particular a hydraulic pressure piston or an electromechanical clamping device.

## Revendications

1. Agencement pour une colonne de direction d'un véhicule utilitaire comprenant un coussinet (1) dans lequel est monté, de manière réglable, un boîtier supérieur de colonne de direction (11) pour un arbre de direction (10), le coussinet (1) présentant des premiers moyens de guidage et de fixation (2, 12, 4, KS), afin de fixer de manière réglable en hauteur (H) le boîtier de colonne de direction (11), et présentant des deuxièmes moyens de guidage et de fixation (5, 6, KS'), afin de fixer de manière réglable en inclinaison (N) le boîtier de colonne de direction (11), les deuxièmes moyens de guidage et de fixation comprenant un bras de levier (5) qui est fixé à une extrémité inférieure de manière réglable sur le coussinet (1) et qui présente à une extrémité supérieure un évidement denté (5a) dans lequel vient en prise un élément denté (6a) qui est connecté au boîtier de colonne de direction (11) de manière directe ou par le biais d'un levier (6),
**caractérisé en ce que**
le bras de levier (5) présente sur son extrémité inférieure un trou rond ou un trou oblong courbe (5b), qui est prévu pour un réglage de l'inclinaison (N) et dans lequel est reçu de manière à pouvoir être fixé un deuxième élément de serrage ou de vissage (KS') pouvant être connecté au boîtier supérieur de colonne de direction (11).

2. Agencement selon la revendication 1, **caractérisé en ce que** les premiers moyens de guidage et de fixation présentent un trou oblong (4) qui est prévu pour un réglage de la hauteur (H), et dans lequel est reçu de manière à pouvoir être fixé un premier élément de serrage ou de vissage (KS) pouvant être connecté au boîtier supérieur de colonne de direction (11).

3. Agencement selon la revendication 2, **caractérisé en ce qu'**une butée inférieure (7) pour l'élément denté (6a) est définie par une fixation du bras de levier (5) au moyen du deuxième élément de serrage ou de vissage (KS') et par une extrémité inférieure de l'évidement (5a), la butée (7) déterminant au moins par rapport à l'inclinaison (N) une position du volant de direction (PD) ajustée de manière optimale pour le conducteur en mode de conduite.

4. Agencement selon la revendication 3, **caractérisé en ce que** la butée inférieure (7) présente un élément d'amortissement, notamment un élément en plastique.

5. Agencement selon l'une quelconque des revendications précédentes, **caractérisé en ce que** l'élément denté (6a) connecté au boîtier de colonne de direction (11), qui vient en prise dans l'évidement (5a) à l'extrémité supérieure du bras de levier (5), présente un élément de fixation, notamment une fermeture à excentrique ou un levier à excentrique (EH).

6. Agencement selon l'une quelconque des revendications précédentes, **caractérisé en ce que** le coussinet (1) est monté à partir de deux parties de boîtier principales, notamment de deux moitiés de bride (1, 1b).

7. Agencement selon l'une quelconque des revendications précédentes, **caractérisé en ce que** les premiers moyens de guidage et de fixation présentent.au moins un rail de guidage (2), dans lequel est reçu de manière deplaçable en hauteur (H), une tôle de guidage (12) du boîtier de colonne de direction (11).

8. Agencement selon l'une quelconque des revendications précédentes, **caractérisé en ce que** les premiers et deuxièmes moyens de guidage et de fixation présentent les vis de serrage (KS, KS'), et/ou au moins un dispositif de serrage (KE), notamment un piston de pression hydraulique ou un dispositif de serrage électromécanique.
